# NEUE EUROPÄISCHE PATENTSCHRIFT

(11) **EP 3 450 707 B2**
(45) Veröffentlichungstag und Bekanntmachung des Hinweises auf die Entscheidung über den Einspruch: **16.08.2023**
(45) Hinweis auf die Patenterteilung: 30.09.2020
(21) Anmeldenummer: 18186481.0
(22) Anmeldetag: 31.07.2018
(51) Int. Cl.: F01L 3/20, F01L 3/22

(54) **VENTIL FÜR EINEN VERBRENNUNGSMOTOR**
VALVE FOR A COMBUSTION ENGINE
SOUPAPE DE MOTEUR À COMBUSTION INTERNE

(30) Priorität: 30.08.2017 DE 102017119887
(43) Veröffentlichungstag der Anmeldung: 06.03.2019
(73) Patentinhaber: MAN Truck & Bus SE, 80995 München (DE)
(72) Erfinder: Schlee, Dimitri, 96050 Bamberg (DE)
(74) Vertreter: v. Bezold & Partner Patentanwälte - PartG mbB

(56) Entgegenhaltungen:
- EP-A1- 0 024 890
- EP-A1- 0 369 967
- EP-A1- 0 369 967
- EP-A1- 1 193 375
- EP-A1- 2 518 285
- EP-A1- 2 915 892
- EP-A1- 3 000 997
- WO-A1-2005/085605
- WO-A1-2017/095836
- CN-A- 101 086 213
- CN-A- 104 234 773
- DE-A1-102009 002 484
- DE-A1-102014 013 503
- DE-A1-102017 119 887
- DE-C- 452 903
- DE-C- 518 822
- DE-T2- 3 876 409
- GB-A- 255 222
- JP-A- S5 937 221
- JP-A- 2001 280 515
- JP-A- 2008 240 535
- KR-B1- 101 123 658
- US-A- 1 338 759
- US-A- 1 467 414
- US-A- 2 089 749
- US-A- 2 152 428
- US-A- 2 386 003
- US-A- 3 086 506
- US-B1- 6 679 219
- US-B2- 8 960 148

## Beschreibung

Die Erfindung betrifft ein Ventil, vorzugsweise ein Abgas- und/oder Gaswechselventil, für einen Verbrennungsmotor, zweckmäßig für ein Kraftfahrzeug, insbesondere ein Nutzfahrzeug, z. B. einen Lastkraftwagen oder einen Omnibus. Ebenso kann das Ventil für Offroad-, marine und/oder stationäre Verbrennungsmotoren dienen.

Zum Stand der Technik kann zunächst auf die WO 2005/085605 A1 verwiesen werden, die ein Gaswechselventil eines Verbrennungsmotors mit jeweils einem hohlen Ventilschaft und Ventilteller offenbart, bei dem der Ventilteller einen Ventilboden und einen mit dessen äußerem Rand verbundenen, hohlen Ventilkegel umfasst, wobei der Ventilkegel sich mit von dem Boden zunehmendem Abstand verjüngt, der Ventilschaft den hohlen Ventilkegel durchläuft und jeweils fest einerseits mit dem Ventilboden sowie andererseits mit dem verjüngten Ende des Ventilkegels verbunden ist, das Ende des mit dem Ventilboden verbundenen Ventilschaftes über die Verbindungsebene zwischen Ventilkegel und Ventilboden hinausragt, und wobei der Ventilboden in dem zwischen seiner Anbindung an den Ventilschaft einerseits und den Ventilkegel andererseits liegenden Ringbereich radial benachbart mindestens eine Ringsicke mit einer nach außen konvex verlaufenden Ringsickenquerschnittsflache aufweist. Zum Stand der Technik kann ferner verwiesen werden auf die JP 2008 240535 A, die EP 1 193 375 A1 und die EP 0 369 967 A1.

Ventile für Verbrennungsmotoren von Kraftfahrzeugen mit einem Ventilschaft und einem Ventilteller sind in den unterschiedlichsten Ausführungsformen bekannt. So sind aus dem Stand der Technik Ventile mit flacher Vorderfläche und Hohlventile mit nach außen ausgebauchter Vorderfläche bekannt. Die ausgebauchte Vorderfläche dient dazu, Platz für Kühlkanäle-/ räume zu schaffen oder die mechanische Festigkeit des durch einen Hohlraum geschwächten Ventils zu erhöhen. Durch hohe Zünddrücke und insbesondere durch innermotorische Abgasmaßnahmen (z. B. Abgasnormen, z. B. Euro-Norm 5 oder besser) erzieltem, sehr sauberem Abgas neigen Ventilteller und Ventilsitze zu starkem, abrasivem Verschleiß. Grund dafür ist die elastische Verformung des Ventiltellers und das Gleiten des Ventiltellers auf dem Ventilsitz während den Zünddruckbelastungen. Problematisch ist, dass sehr sauberes Abgas gegenüber schmutzigem Abgas keinen oder nur noch sehr wenig Schmierstoff (Ruß) zur Verschleißminderung zwischen Ventil und Ventilsitz zur Verfügung stellt. Um den Verschleiß zwischen Ventil und Ventilsitz zu reduzieren, ist es aus der Praxis bekannt, relativ teure verschleißfeste Werkstoffe und/oder kleine, allerdings strömungsungünstige Ventilsitzwinkel (z. B. kleiner 30°) zu verwenden.

Aus der DE 10 2014 013 503 A1 ist bereits ein Wölb-Ventil bekannt, das trotz sauberem, insbesondere rußarmen Abgas bei Zünddruckbelastung nicht oder zumindest nur geringfügig auf dem Ventilsitzring gleitet und dadurch einen geringen Verschleiß aufweist, vorzugsweise ohne Strömungsnachteile in Kauf nehmen zu müssen. Nachteilig daran ist allerdings die relativ große Ausbauchung des Ventiltellers, die einerseits Zusatzgewicht mit sich bringt und andererseits im Betrieb relativ tief im Brennraum steht. Das in DE 10 2014 013 503 A1 offenbarte Wölb-Ventil ist folglich in seiner Masse normalerweise schwerer als Standardventile, was einen Einfluss auf die Dynamik des Ventiltriebs zur Folge hat. Darüber hinaus ragt im Betrieb die Ausbauchung üblicherweise weiter in den Brennraum als bei Standardventilen. Das hat zur Folge, dass große Ventiltaschen am Kolben benötigt werden, welche das System verteuern. Der Ventilüberstand beeinflusst außerdem die Verbrennung. Im Speziellen bei Ottomotoren kann durch eine ungünstige Anordnung die Zündung verschlechtert werden, da die turbulent kinetische Energie (TKE) und Ladungsbewegung reduziert werden.

Eine Aufgabe der Erfindung ist es, ein konstruktiv einfach bzw. kostengünstig herzustellendes Ventil für einen Verbrennungsmotor zu schaffen, das relativ leichtgewichtig ist und/oder dessen Einfluss auf die Verbrennung des Verbrennungsmotors reduziert ist, insbesondere im Vergleich zu dem in DE 10 2014 013 503 A1 beschriebenen Wölb-Ventil.

Diese Aufgabe kann mit den Merkmalen des unabhängigen Anspruchs gelöst werden. Vorteilhafte Weiterbildungen der Erfindung können den Unteransprüchen und der folgenden Beschreibung bevorzugter Ausführungsformen der Erfindung entnommen werden.

Die Erfindung schafft ein Ventil, vorzugsweise ein Abgas- und/oder Gaswechselventil, für einen Verbrennungsmotor, vorzugsweise für ein Kraftfahrzeug. Das Ventil weist z. B. einen Ventilschaft und einen Ventilteller auf. Der Ventilteller umfasst eine Vorderfläche und eine Rückfläche. Die Vorderfläche dient zweckmäßig zum lastseitigen, insbesondere Brennraum- und/oder Druckraum-seitigen, Platzieren, so dass sie zweckmäßig im Betrieb der Lastseite, insbesondere der Druck- und/oder Brennraum-Seite zugewandt ist.

Die Vorderfläche des Ventiltellers weist eine mittig angeordnete Ausbauchung mit einem Gipfelbereich auf. Die Vorderfläche weist zweckmäßig ferner einen Randbereich auf, der sich insbesondere um die Ausbauchung herum erstrecken kann und vorzugsweise abschnittsweise Teil der Ausbauchung sein kann und abschnittsweise seitlich neben und außerhalb der Ausbauchung verlaufen kann.

Das Ventil zeichnet sich dadurch aus, dass, vorzugsweise zur Massereduzierung der Ausbauchung des Ventiltellers, insbesondere zur Massereduzierung der Ausbauchungsbasis (zweckmäßig Ausbauchungsboden), ein seitlich äußerer Teilabschnitt des Randbereichs flacher ausgeführt ist im Vergleich zu einem seitlich inneren Teilabschnitt des Randbereichs und vorzugsweise der Randbereich zweckmäßig im Querschnitt zumindest eine Diskontinuität umfasst.

Darüber hinaus kann dadurch zweckmäßig eine Querschnittsfläche der Ausbauchung reduziert werden, so dass vorzugsweise im Betrieb die Störfläche reduziert werden kann.

Das Ventil wie hierin offenbart kann vorzugsweise dem Prinzip nach im Wesentlichen gemäß dem in der DE 10 2014 013 503 A1 beschriebenen Wölb-Ventil ausgeführt sein. Bei dem in DE 10 2014 013 503 A1 beschriebenen Wölb-Ventil ist es möglich, dass der Randbereich im Betrieb nicht oder zumindest nicht wesentlich beansprucht wird, z. B. durch eine Druck- und/oder Ventilfederkraft.

Das Ventil wie hierin offenbart ist deshalb vorzugsweise so ausgeführt, dass die im Betrieb nicht oder nur unwesentlich beanspruchte Masse im Randbereich der Ausbauchung, insbesondere die im Betrieb nicht oder nur unwesentlich beanspruchte Masse der Ausbauchungsbasis, zumindest im Wesentlichen entfernt wurde.

Trotz im Vergleich zum Wölb-Ventil gemäß DE 10 2014 013 503 A1 gleicher minimaler Wandstärke des Ventiltellers kann dadurch z. B. ermöglicht werden, dass im Betrieb die maximale Spannung des wie hierin offenbarten Ventiltellers und die maximale Spannung des Ventiltellers gemäß DE 10 2014 013 503 A1 im Wesentlichen gleich groß sind.

Es ist möglich, dass die zumindest eine Diskontinuität zumindest einen Scheitelpunkt (z. B. zumindest einen Hochpunkt und/oder Tiefpunkt), zumindest einen Knickpunkt und/oder zumindest einen Wendpunkt umfasst.

Es ist möglich, dass im Querschnitt die zumindest eine Diskontinuität relativ zu einem seitlich inneren Ende des Randbereichs außenseitig angeordnet ist und/oder relativ zu einem seitlich äußeren Ende des Randbereichs innenseitig angeordnet ist.

Das seitlich innere Ende kann z. B. an den Gipfelbereich anschließen, wobei alternativ oder ergänzend das seitlich äußere Ende das vorzugsweise seitlich äußerste Ende der Vorderfläche darstellen kann.

Es ist möglich, dass der äußere Teilabschnitt des Randbereichs eine geringere Steigung aufweist im Vergleich zu dem inneren Teilabschnitt des Randbereichs.

Der äußere Teilabschnitt des Randbereichs kann z. B. eine Steigung in einem Bereich von kleiner als ungefähr +/-5° aufweisen.

Es ist möglich, dass der äußere Teilabschnitt des Randbereichs zumindest abschnittsweise im Wesentlichen Ausbauchungs-frei ausgeführt ist und/oder die Ausbauchung sich nicht bis zu einem seitlich äußeren Ende des Ventiltellers und/oder der Vorderfläche erstreckt.

Die Ausbauchung des Ventiltellers kann z. B. zumindest abschnittsweise durch eine im Wesentlichen sphärische, parabolische oder kegelstumpfförmige Ausformung gebildet sein, wobei optional der äußere Teilabschnitt des Randbereichs von der im Wesentlichen sphärischen, parabolischen oder kegelstumpfförmigen Ausformung abweichen kann.

Die Ausbauchung ist mittig angeordnet. Es ist möglich, dass der Gipfelbereich im Wesentlichen mittig angeordnet ist.

Der äußere Teilabschnitt des Randbereichs kann vorzugsweise den seitlich äußersten Teil der Vorderfläche umfassen, wobei der innere Teilabschnitt des Randbereichs z. B. zwischen dem Gipfelbereich und dem äußeren Teilabschnitt des Randbereichs angeordnet sein kann.

Es ist möglich, dass der innere Teilabschnitt des Randbereichs einen seitlichen Teil der Ausbauchung bildet und/oder sich der äußere Teilabschnitt des Randbereichs sich z. B. seitlich neben und vorzugsweise außerhalb der Ausbauchung erstreckt.

Der äußere Teilabschnitt des Randbereichs und/oder die zumindest eine Diskontinuität kann sich z. B. im Wesentlichen ringförmig erstrecken, z. B. im Wesentlichen rotationssymmetrisch erstrecken.

Bei einer Ausführungsform kann z. B. die Vorderfläche des Ventiltellers und/oder der Ventilteller vorzugsweise im Wesentlichen rotationssymmetrisch ausgeformt sein.

Zu erwähnen ist, dass im Kontext der Erfindung die Vorderfläche des Ventiltellers und somit vorzugsweise die Ausbauchung, der Gipfelbereich und/oder der Randbereich z. B. zumindest abschnittsweise linear und/oder gekrümmt (z. B. bogenförmig) ausgeformt sein können.

Zu erwähnen ist nochmals, dass die Ausbauchung vorzugsweise im Wesentlichen sphärisch, parabolisch oder kegelstumpfförmig ausgeformt sein kann.

Das Ventil ist als Vollventil ausgeführt, vorzugsweise als Wölb-Ventil.

Die neutrale Faser des Ventiltellers erstreckt sich zumindest abschnittsweise, zweckmäßig zum überwiegenden Teil, lastseitig, also im Betrieb auf der Lastseite, insbesondere auf einer Druck- und/oder Brennraum-Seite, einer fiktiven bzw. gedachten Bezugsebene, die zweckmäßig durch die wirksame Mitte der Ventilsitzfläche des Ventiltellers und quer zum Ventilschaft verläuft. Die wirksame Mitte der Ventilsitzfläche des Ventiltellers wird zweckmäßig durch die Mitte der Kontaktfläche zwischen der Ventilsitzfläche des Ventiltellers und eines Ventilsitzes hierfür definiert.

Die neutrale Faser des Ventiltellers erstreckt sich zum überwiegenden Teil lastseitig der Bezugsebene, z. B. zu mehr als 50%, 60%, 70%, 80%, 90% oder sogar zu mehr als 95% und/oder quasi gänzlich im Ventiltellerbereich seitlich des Ventilschafts (also insbesondere unter Ausblendung des Ventilschafts).

Bei einer Ausführungsform der Erfindung erstreckt sich die resultierende Wirklinie des Ventiltellers, also quasi dessen neutrale Faser, vorzugsweise zum überwiegenden Teil lastseitig der resultierenden Wirklinie der Ventilsitzfläche, also quasi der Bezugsebene.

Als Vollventil im Rahmen der Erfindung sind Ventile mit einem massiven Ventilteller ohne Hohlraum gemeint, insbesondere ohne Kühlhohlraum und/oder ohne Kühlleitungen, und optional mit einem massiven Ventilschaft, also insbesondere ohne Hohlraum, ohne Kühlhohlraum und/oder ohne Kühlleitungen.

Die Ventilsitzfläche des Ventiltellers ist vorzugsweise schräg ausgeführt.

Es ist möglich, dass der zweckmäßig kanalseitige Tulpenwinkel der Rückfläche des Ventiltellers kleiner ist als 20°, 15°, 12°, 10° oder 8°. Dabei kann die Rückfläche z. B. geradlinig oder gekrümmt ausgeformt sein.

Eine gewisse Verschleißminderung kann auch durch Wahl eines kleinen Ventilsitzwinkels von im Extremfall 0° erzielt werden, wodurch jedoch der Strömungswiderstand des Ventils steigt, so dass der Gaswechsel behindert wird und der Kraftstoffverbrauch des Verbrennungsmotors steigt.

Gemäß einer Ausführungsform der Erfindung ist der Ventilsitzwinkel der Ventilsitzfläche des Ventiltellers zweckmäßig größer als 25°, 30°, 35°, 40° oder 45° und/oder kleiner als 70°, 65°, 60°, 55° oder 50°, so dass eine Gleit- und somit Verschleißreduzierung ohne Strömungsnachteile ermöglicht wird.

Die neutrale Faser, also insbesondere die Materialmitte, des Ventiltellers verläuft insbesondere so, dass sie zur Lastseite (insbesondere Brennraum- und/oder zur Druckraum-Seite) hin und/oder nach außen ausgebaucht ist.

Der Gipfelbereich der neutralen Faser verläuft relativ zum Ventilschaft außermittig und vorzugsweise koaxial, insbesondere ringförmig.

Es ist möglich, dass die Vorderfläche des Ventiltellers sphärisch, parabolisch oder kegelstumpfförmig ausgebaucht ist. Eine sphärische oder parabolische Ausbauchung ist zwar ideal oder zumindest vorteilhaft, allerdings aufwendig zu fertigen. Sie können deshalb durch eine zweckmäßig flache kegelstumpfförmige Ausbauchung angenähert werden.

Der Gipfelbereich der Vorderfläche des Ventiltellers ist relativ zum Ventilschaft vorzugsweise mittig ausgerichtet ist.

Der Verbrennungsmotor ist vorzugsweise ein Diesel-, oder Gas- bzw. Otto-Verbrennungsmotor.

Die Rückfläche des Ventiltellers ist vorzugsweise flacher ausgeformt als die Vorderfläche des Ventiltellers. Dabei kann die Rückfläche und/oder die Vorderfläche z. B. geradlinig und/oder gekrümmt ausgeformt sein.

Wie schon zuvor erwähnt, wird die wirksame Mitte der Ventilsitzfläche des Ventiltellers durch die Mitte der Kontaktfläche zwischen der Ventilsitzfläche des Ventiltellers und eines Ventilsitzes hierfür definiert. Im Rahmen der Erfindung kann die wirksame Mitte der Ventilsitzfläche des Ventiltellers somit relativ zu der Ventilsitzfläche des Ventiltellers z. B. tatsächlich mittig angeordnet sein, allerdings auch außermittig.

Es ist möglich, dass die Vorderfläche des Ventiltellers im Querschnitt z. B. zumindest abschnittsweise im Wesentlichen S-förmig ausgebildet ist, vorzugsweise umfassend die Ausbauchung und/oder den seitlich äußeren Teilabschnitt des Randbereichs.

Die im Wesentlichen S-Form kann sich z. B. ringförmig erstrecken, vorzugsweise rotationssymmetrisch erstrecken.

Die Erfindung ist nicht auf ein Ventil beschränkt, sondern umfasst auch eine Ventil-Ventilsitz-Kombination mit einem Ventil wie hierin offenbart und einem Ventilsitz hierfür.

Der Erfindung umfasst zudem ein Kraftfahrzeug, vorzugsweise ein Nutzfahrzeug, insbesondere einen Lastkraftwagen oder einen Omnibus, mit vorzugsweise einem Verbrennungsmotor, der einen Brenn- und/oder Druckraum mit einer Ventil-Ventilsitz-Kombination wie hierin beschrieben umfasst.

Die zuvor beschriebenen bevorzugten Ausführungsformen und Merkmale der Erfindung sind miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine schematische Querschnittsansicht eines Teils zweier Ventile gemäß Stand der Technik,
- Figur 2: zeigt eine schematische Querschnittsansicht eines Teils eines Ventils gemäß einer Ausführungsform der Erfindung,
- Figur 3: zeigt eine schematische Querschnittsansicht eines Teils eines Ventils gemäß einer anderen Ausführungsform der Erfindung,
- Figur 4: zeigt eine schematische Querschnittsansicht eines Teils eines Ventils gemäß einer wiederum anderen Ausführungsform der Erfindung,
- Figur 5: zeigt eine schematische Querschnittsansicht eines Teils eines Ventils gemäß einer noch anderen Ausführungsform der Erfindung,
- Figur 6: zeigt eine perspektivische Seitenansicht eines Ventils gemäß einer Ausführungsform der Erfindung, und
- Figur 7: zeigt eine perspektivische Seitenansicht eines Ventils gemäß Stand der Technik.

Die in den Figuren gezeigten Ausführungsformen stimmen teilweise überein, so dass für ähnliche oder im Wesentlichen gleiche Teile die gleichen Bezugszeichen verwendet sind, wobei zu deren Erläuterung auch auf die Beschreibung der anderen Ausführungsformen verwiesen wird, um Wiederholungen zu vermeiden.

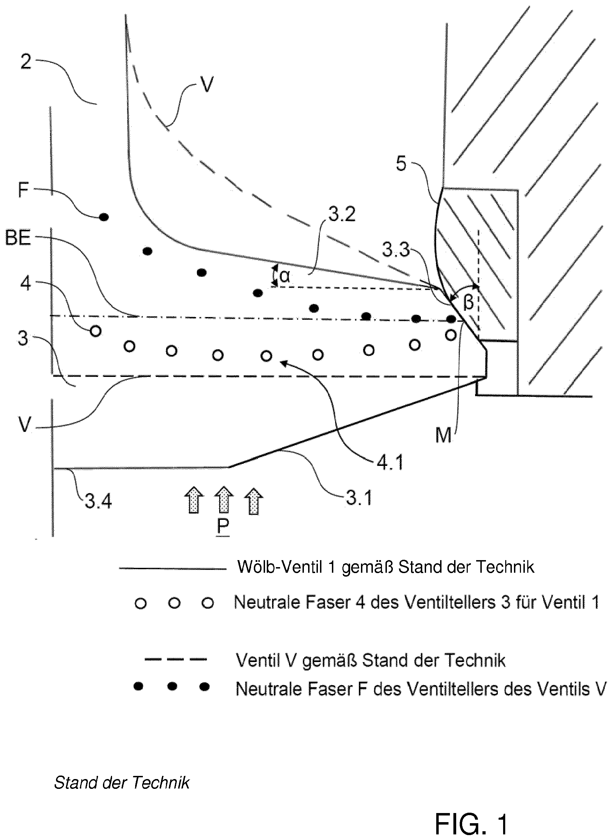

Figur 1 zeigt eine schematische Ansicht eines Teils eines Wölb-Ventils 1 gemäß DE 10 2014 013 503 A1 für einen Otto- oder Gasmotor bzw. einen die Abgasnorm Euro ≥ 5 erfüllenden Diesel-Motor, so dass das Ventil 1 mit relativ sauberen, rußarmen Abgas beaufschlagt wird. Figur 1 zeigt zum Vergleich hierzu ebenfalls schematisch ein Ventil V, das ebenfalls in der DE 10 2014 013 503 A1 beschrieben ist.

Das erfindungsgemäße Ventil 100 kann zunächst dem Prinzip nach im Wesentlichen wie das in Figur 1 zu sehende Wölb-Ventil 1 ausgebildet sei.

Das Ventil 1 umfasst einen Ventilschaft 2 und einen Ventilteller 3. Der Ventilteller 3 umfasst eine Vorderfläche 3.1, die im Betrieb einem Druck-/Brennraum P (Lastseite) zugewandt ist, eine Rückfläche 3.2, die im Betrieb dem Druck-/Brennraum P abgewandt ist, und eine zweckmäßig schräge Ventilsitzfläche 3.3 zum Aufsitzen auf einem Ventilsitz (Sitzring) 5.

Die Vorderfläche 3.1 ist nach außen, im Betrieb zur Lastseite P (Druck-/Brennraum) hin ausgebaucht und das Ventil 1 ist als massives Vollventil und somit hohlraumfrei, insbesondere kühlleitungsfrei und kühlhohlraumfrei ausgeführt.

Die neutrale Faser 4 und somit die Mittellinie des Ventiltellers 3 ist ebenfalls zur Lastseite P hin ausgebaucht, insbesondere so, dass sie sich zweckmäßig zumindest zum überwiegenden Teil lastseitig, also im Betrieb auf der Lastseite P, einer fiktiven bzw. gedachten Bezugsebene BE erstreckt. Die Bezugsebene BE verläuft durch die wirksame Mitte M der Ventilsitzfläche 3.3 des Ventiltellers 3 und quer zum Ventilschaft 2. Die neutrale Faser 4 kennzeichnet quasi die resultierende Wirklinie des Ventiltellers 3, während die Bezugsebene BE quasi die resultierende Wirklinie der Ventilsitzfläche 3.3 kennzeichnet.

Die wirksame Mitte M der Ventilsitzfläche 3.3 des Ventiltellers 3 wird somit durch die im Betrieb resultierende Mitte der Kontaktfläche zwischen der Ventilsitzfläche 3.3 des Ventiltellers 3 und des Ventilsitzes 5 definiert.

Insbesondere dadurch, dass das Ventil 1 als Vollventil mit nach außen ausgebauchter Vorderfläche 3.1 ausgeführt ist, kann die neutrale Faser 4 des Ventiltellers 3 zumindest großteils lastseitig der Bezugsebene BE verlaufen, so dass bei Zünddruckbelastung kein oder nur ein sehr geringes Gleiten der Ventilsitzfläche 3.3 auf dem Ventilsitz 5 entsteht. Da Gleiten die Hauptursache des Verschleißes zwischen Ventil 1 und Ventilsitz 5 ist, wird folglich trotz kein oder kaum Schmiermittel in Form von Ruß lieferndem, relativ sauberem Abgas der Verschleiß vermindert oder beseitigt.

Der Gipfelbereich 3.4 der Vorderfläche 3.1 des Ventiltellers 3 ist relativ zum Ventilschaft 2 im Wesentlichen mittig ausgerichtet.

Der Gipfelbereich 4.1 der neutralen Faser 4 verläuft wegen dem Ventilschaft 2 relativ zum Ventilschaft 2 außermittig und ringförmig koaxial zum Ventilschaft 2.

Die Rückfläche 3.2 des Ventiltellers 3 ist zweckmäßig flacher ausgeführt als die Vorderfläche 3.1 des Ventiltellers 3. Die Vorderfläche 3.1 und/oder die Rückfläche 3.2 können z. B. geradlinig oder gekrümmt ausgeführt sein.

Der Tulpenwinkel α der Rückfläche 3.2 des Ventiltellers 3 ist kleiner als 20°, in der gezeigten Ausführungsform ca. 7°.

Der Ventilsitzwinkel β der Ventilsitzfläche 3.3 ist größer als 25°, in der gezeigten Ausführungsform ca. 40°.

In Figur 1 ist darüber hinaus ein anderes Ventil V gemäß Stand der Technik mit einer neutralen Faser F angedeutet.

Der Vergleich zwischen dem Ventil 1 und dem Ventil V zeigt, dass der kanalseitige Tulpenwinkel α des Ventils 1 kleiner (flacher) ist als bei dem Ventil V, im Gegenzug die Vorderfläche 3.1 allerdings verstärkt und ausgebaucht ist, so dass die neutrale Faser 4 zum Druck-/Brennraum P hin ausgebaucht ist. Die Ausformung des Ventils 1 führt zu einer Verstärkung des Ventils 1, insbesondere des Ventiltellers 3 auf der Brenn-/Druckraum P zugewandten Seite und einem Abmagern auf der Brenn-/Druckraum P abgewandten Seite. Die neutrale Faser F des Ventils V gemäß Stand der Technik verläuft relativ zu der Bezugsebene BE auf der der Lastseite P abgewandten Seite, also in Figur 1 oberhalb der Bezugsebene BE.

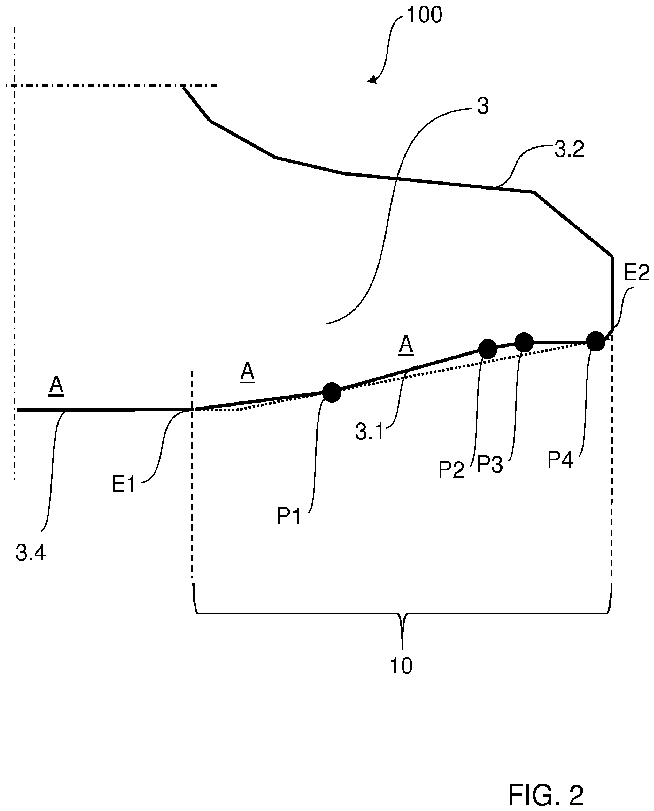

Figur 2 zeigt eine schematische Querschnittsansicht eines Teils eines Ventils 100 gemäß einer Ausführungsform der Erfindung in durchgezogenen Linien, wobei die gepunktete Linie zum Vergleich prinzipiell den Verlauf des Randbereichs des Ventils 1 aus Figur 1 zeigt.

Das Ventil 100 umfasst einen Ventilteller 3 mit einer Vorderfläche 3.1 und einer Rückfläche 3.2. Die Vorderfläche 3.1 des Ventiltellers 3 umfasst einen Randbereich 10 und eine im Wesentlichen mittig angeordnete Ausbauchung A nach außen, wobei die Ausbauchung A einen Gipfelbereich 3.4 aufweist.

Der Randbereich 10 wird zweckmäßig im Querschnitt durch ein seitlich inneres Ende E1 und ein seitlich äußeres Ende E2 begrenzt. Das innere Ende E1 schließt an den Gipfelbereich 3.4 an, wobei das äußere Ende E2 das äußerste seitliche Ende der Vorderfläche 3.1 bzw. des Ventiltellers 3 darstellen kann.

Der Randbereich 10 erstreckt sich ringförmig um die Ausbauchung A des Ventiltellers 3 und ist dabei teilweise seitlich neben und außerhalb der Ausbauchung A und teilweise auf der Ausbauchung A angeordnet. Die Ausbauchung A selbst kann zumindest abschnittsweise im Wesentlichen sphärisch, parabolisch oder kegelstumpfförmig ausgeformt sein.

Eine Besonderheit des Ventils 100 ist, dass ein seitlich äußerer Teilabschnitt des Randbereichs 10 flacher ausgeführt ist im Vergleich zu einem seitlich inneren Teilabschnitt des Randbereichs 10 und der Randbereich 10 im Querschnitt mehrere Diskontinuitäten P1 bis P4 umfasst, um die Masse der Ausbuchung A, insbesondere die Masse der Ausbauchungsbasis, zu reduzieren. Dadurch kann die Vorderfläche 3.1 im Querschnitt zweckmäßig im Wesentlichen S-förmig ausgeformt werden.

Bei der in Figur 2 gezeigten Ausführungsform ist der äußere Teilabschnitt des Randbereichs 10 Ausbauchungs-frei ausgeführt, so dass der äußere Teilabschnitt eine Steigung von im Wesentlichen 0° aufweist und folglich der äußere Teilabschnitt des Randbereichs 10 eine geringere Steigung aufweist im Vergleich zu dem inneren Teilabschnitt des Randbereichs 10. Im Kontext der Erfindung kann der äußere Teilabschnitt allerdings auch Steigungen in einem Bereich von vorzugsweise ungefähr +/- 5° aufweisen.

Im Gegensatz zum Wölb-Ventil 1 erstreckt sich die Ausbauchung A des Ventils 100 nicht bis zum seitlich äußeren Ende E2, so dass zumindest der äußere Teilabschnitt des Randbereichs 10 von der sphärischen, parabolischen oder kegelstumpfförmigen Ausbauchung A abweicht.

Die im Querschnitt mehreren Diskontinuitäten P1 bis P4 können zweckmäßig durch zumindest einen Scheitelpunkt, Knickpunkt oder Wendpunkt oder eine Kombination hiervon gebildet werden.

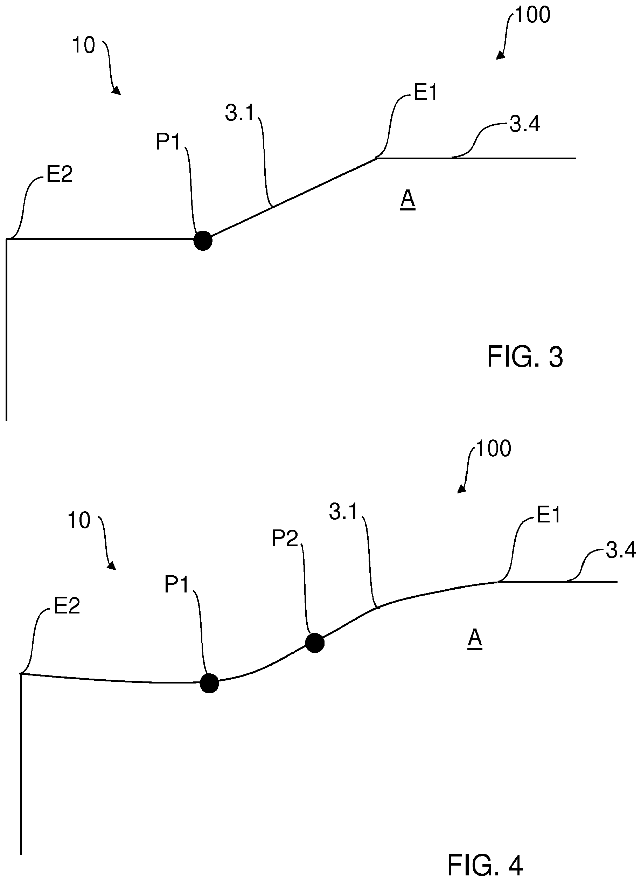

Die Figuren 3 bis 5 zeigen schematische Querschnittsansichten eines Teils eines Ventils 100 gemäß anderer Ausführungsformen der Erfindung.

Figur 3 zeigt dabei insbesondere einen Randbereich 10 mit im Querschnitt linear verlaufenden Teilabschnitten und einer Diskontinuität P1.

Figur 4 zeigt dabei insbesondere einen Randbereich 10 mit im Querschnitt gekrümmt verlaufenden Teilabschnitten und zwei Diskontinuitäten P1 und P2.

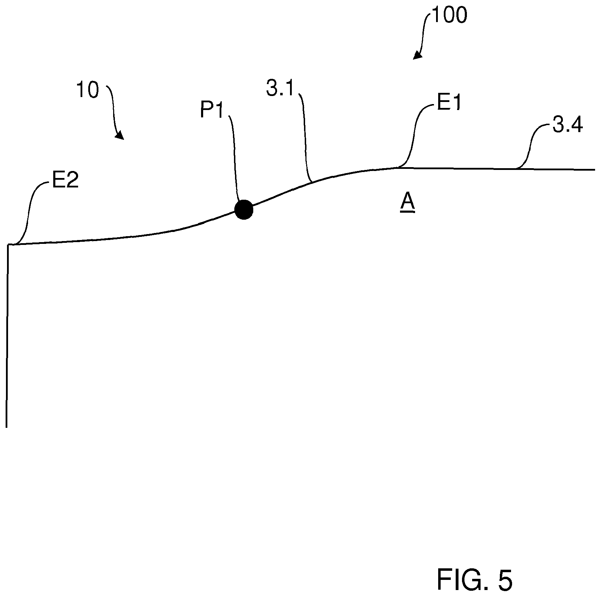

Figur 5 zeigt dabei insbesondere einen Randbereich 10 mit im Querschnitt gekrümmt verlaufenden Teilabschnitten und einer Diskontinuität P1.

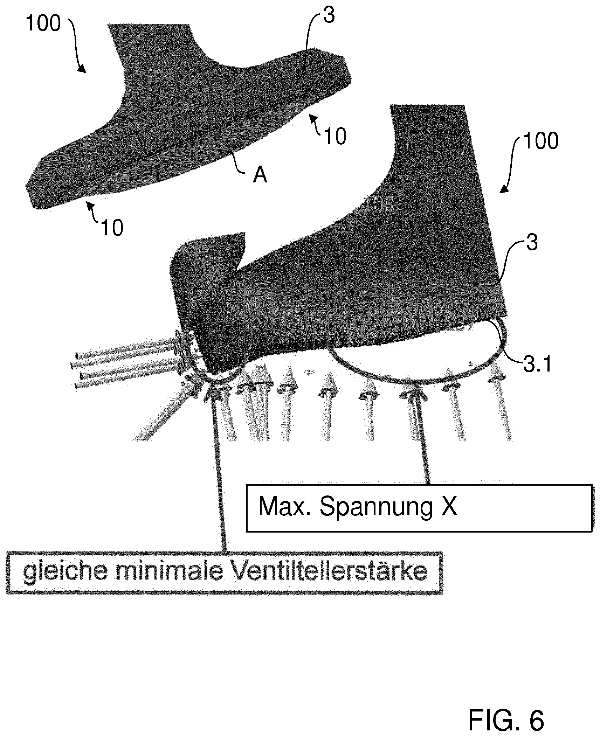

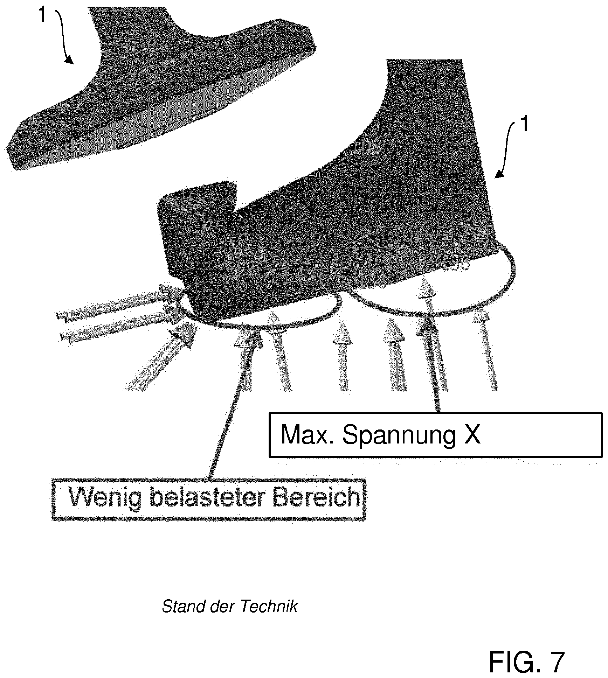

Figur 6 zeigt eine perspektivische Seitenansicht eines Ventils 100 gemäß einer Ausführungsform der Erfindung, wobei Figur 7 eine perspektivische Seitenansicht des Wölb-Ventils 1 zeigt. Bei dem in Figur 7 zu sehenden Wölb-Ventil 1, das wie schon zuvor erwähnt gemäß DE 10 2014 013 503 A1 ausgeführt sein kann, ist es möglich, dass der Randbereich des Ventiltellers 3, insbesondere die Ausbauchungsbasis, im Betrieb, z. B. durch eine Druck- und/oder Ventilfederkraft, nicht oder zumindest nicht wesentlich beansprucht wird.

Bei dem in Figur 6 zu sehenden Ventil 100 ist deshalb zur Massereduzierung der Ausbuchung A des Ventiltellers 3 der äußere Teilabschnitt des Randbereichs 10 flacher ausgeführt im Vergleich zu dem inneren Teilabschnitt des Randbereichs 10, wobei der Randbereich 10 im Querschnitt zumindest eine Diskontinuität P1 bis P4 umfasst, um dadurch die im Betrieb nicht oder nur unwesentlich beanspruchte Masse zu entfernen.

Trotz im Vergleich zum Wölb-Ventil 1 gleicher minimaler Wandstärke des Ventiltellers kann dadurch ermöglicht werden, dass die maximale Spannung des Ventiltellers 3 des Ventils 100 und die maximale Spannung des Ventiltellers 3 des Wölb-Ventils 1 im Wesentlichen gleich bleiben, z. B. mit einer maximalen Spannung X von z. B. ungefähr 136 bis 137 Mpa.

### Bezugszeichenliste

- 1: Ventil gemäß Stand der Technik
- 2: Ventilschaft
- 3: Ventilteller
- 3.1: Vorderfläche des Ventiltellers
- 3.2: Rückfläche des Ventiltellers
- 3.3: Ventilsitzfläche
- 3.4: Gipfelbereich der Vorderfläche des Ventiltellers
- 4: Neutrale Faser
- 4.1: Gipfelbereich der neutralen Faser
- 5: Ventilsitz
- α: Tulpenwinkel der Rückfläche des Ventiltellers
- β: Ventilsitzwinkel der Ventilsitzfläche des Ventiltellers
- P: Lastseite, insbesondere Brenn- und/oder Druckraum-Seite
- BE: Bezugsebene
- M: Wirksame Mitte der Ventilsitzfläche
- V: Ventil gemäß Stand der Technik
- F: Neutrale Faser des Ventiltellers des Ventils V

- 100: Ventil
- 10: Randbereich
- P1: Diskontinuität
- P2: Diskontinuität
- P3: Diskontinuität
- P4: Diskontinuität
- A: Ausbauchung
- E1: Seitlich inneres Ende
- E2: Seitlich äußeres Ende

## Patentansprüche

1. Ventil (100), vorzugsweise Abgas- und/oder Gaswechselventil (100), mit: einem eine Vorderfläche (3.1) und eine Rückfläche (3.2) aufweisenden Ventilteller (3), wobei die Vorderfläche (3.1) des Ventiltellers (3) eine einen Gipfelbereich (3.4) aufweisende Ausbauchung (A) und einen Randbereich (10) umfasst, wobei das Ventil (100) als Vollventil ausgeführt ist und sich eine neutrale Faser (4) des Ventiltellers (3) abschnittsweise lastseitig einer gedachten Bezugsebene (BE) erstreckt, wobei die Bezugsebene (BE) durch die wirksame Mitte (M) einer Ventilsitzfläche (3.3) des Ventiltellers (3) und quer zu einem Ventilschaft (2) des Ventils (100) verläuft, wobei der Gipfelbereich (4.1) der neutralen Faser (4) relativ zum Ventilschaft (2) außermittig verläuft, und wobei sich die neutrale Faser (4) des Ventiltellers (3) zum überwiegenden Teil lastseitig der Bezugsebene (BE) erstreckt, **dadurch gekennzeichnet, dass**, vorzugsweise zur Massereduzierung der Ausbauchung (A) des Ventiltellers (3), ein seitlich äußerer Teilabschnitt des Randbereichs (10) flacher ausgeführt ist im Vergleich zu einem seitlich inneren Teilabschnitt des Randbereichs (10), wobei die Ausbauchung (A) des Ventiltellers (3) mittig angeordnet ist.

2. Ventil (100) nach Anspruch 1, **dadurch gekennzeichnet, dass** der Randbereich (10) im Querschnitt zumindest eine Diskontinuität (P1-P4) umfasst und die zumindest eine Diskontinuität (P1-P4) zumindest einen Scheitelpunkt, Knickpunkt und/oder Wendepunkt umfasst und vorzugsweise die zumindest eine Diskontinuität (P1-P4) sich ringförmig erstreckt, vorzugsweise rotationssymmetrisch erstreckt.

3. Ventil (100) nach Anspruch 2, **dadurch gekennzeichnet, dass** im Querschnitt die zumindest eine Diskontinuität (P1-P4) relativ zu einem seitlich inneren Ende (E1) des Randbereichs (10) außenseitig angeordnet ist und/oder relativ zu einem seitlich äußeren Ende (E2) des Randbereichs (10) innenseitig angeordnet ist.

4. Ventil (100) nach Anspruch 3, **dadurch gekennzeichnet, dass** das innere seitliche Ende (E1) an den Gipfelbereich (3.4) anschließt und/oder das äußere seitliche Ende (E2) das äußerste seitliche Ende der Vorderfläche (3.1) darstellt.

5. Ventil (100) nach einem der vorhergehenden Ansprüche, **dadurch gekennzeichnet, dass** der äußere Teilabschnitt des Randbereichs (10) eine geringere Steigung aufweist im Vergleich zu dem inneren Teilabschnitt des Randbereichs (10) und/oder der äußere Teilabschnitt des Randbereichs (10) eine Steigung in einem Bereich von kleiner als +/-5° aufweist.

6. Ventil (100) nach einem der vorhergehenden Ansprüche, **dadurch gekennzeichnet, dass** der äußere Teilabschnitt des Randbereichs (10) zumindest abschnittsweise im Wesentlichen Ausbauchungs-frei ausgeführt ist und/oder die Ausbauchung (A) sich nicht bis zu einem seitlich äußeren Ende (E2) des Ventiltellers (3) erstreckt.

7. Ventil (100) nach einem der vorhergehenden Ansprüche, **dadurch gekennzeichnet, dass** die Ausbauchung (A) des Ventiltellers (3) durch eine sphärische, parabolische oder kegelstumpfförmige Ausformung gebildet wird, wobei vorzugsweise der äußere Teilabschnitt des Randbereichs (10) von der sphärischen, parabolischen oder kegelstumpfförmigen Ausformung abweicht.

8. Ventil (100) nach einem der vorhergehenden Ansprüche, **dadurch gekennzeichnet, dass** der äußere Teilabschnitt des Randbereichs (10) den seitlich äußersten Teil der Vorderfläche (3.1) umfasst.

9. Ventil (100) nach einem der vorhergehenden Ansprüche, **dadurch gekennzeichnet, dass** der innere Teilabschnitt des Randbereichs (10) einen seitlichen Teil der Ausbauchung (A) bildet und/oder der äußere Teilabschnitt des Randbereichs (10) sich seitlich neben und außerhalb der Ausbauchung (A) erstreckt.

10. Ventil (100) nach einem der vorhergehenden Ansprüche, **dadurch gekennzeichnet, dass** der äußere Teilabschnitt des Randbereichs (10) sich ringförmig erstreckt, vorzugsweise rotationssymmetrisch erstreckt.

11. Ventil (100) nach einem der vorhergehenden Ansprüche, **dadurch gekennzeichnet, dass** die neutrale Faser (4) des Ventiltellers (3) zur Lastseite (P) hin ausgebaucht ist.

12. Ventil (100) nach einem der vorhergehenden Ansprüche, **dadurch gekennzeichnet, dass** die Vorderfläche (3.1) des Ventiltellers (3) im Querschnitt zumindest abschnittsweise S-förmig ausgebildet ist.

13. Ventil-Ventilsitz-Kombination mit einem Ventil (100) nach einem der vorhergehenden Ansprüche und einem Ventilsitz (5) für das Ventil (100).

14. Ventil-Ventilsitz-Kombination nach Anspruch 13, **dadurch gekennzeichnet, dass** die wirksame Mitte (M) der Ventilsitzfläche (3.3) des Ventiltellers (3) durch die Mitte der Kontaktfläche zwischen der Ventilsitzfläche (3.3) des Ventiltellers (3) und des Ventilsitzes (5) definiert wird.

15. Kraftfahrzeug, vorzugsweise Nutzfahrzeug, mit einer Ventil-Ventilsitz-Kombination nach Anspruch 13 oder 14.

## Claims

1. Valve (100), preferably exhaust gas and/or gas exchange valve (100), with: a valve head (3) which has a front face (3.1) and a rear face (3.2), the front face (3.1) of the valve head (3) comprising an edge region (10) and a bulge (A) which has a tip region (3.4), the valve (100) being configured as a solid valve, and a neutral axis (4) of the valve head (3) running in sections on the load side of an imaginary reference plane (BE), the reference plane (BE) running through the effective centre (M) of a valve seat face (3.3) of the valve head (3) and transversely with respect to a valve stem (2) of the valve (100), the tip region (4.1) of the neutral axis (4) running eccentrically with respect to the valve stem (2), and the neutral axis (4) of the valve head (3) extending predominantly on the load side of the reference plane (BE), **characterized in that**, preferably in order to reduce the mass of the bulge (A) of the valve head (3), a laterally outer part section of the edge region (10) is of flatter configuration in comparison with a laterally inner part section of the edge region (10), wherein the bulge (A) of the valve head (3) is arranged centrally.

2. Valve (100) according to Claim 1, **characterized in that** the edge region (10) comprises at least one discontinuity (P1-P4) in cross section, and the at least one discontinuity (P1-P4) comprises at least one vertex, inflexion point and/or reversal point, and the at least one discontinuity (P1-P4) preferably extends annularly, preferably in a rotationally symmetrical manner.

3. Valve (100) according to Claim 2, **characterized in that**, in cross section, the at least one discontinuity (P1-P4) is arranged on the outer side relative to a laterally inner end (E1) of the edge region (10), and/or is arranged on the inner side relative to a laterally outer end (E2) of the edge region (10).

4. Valve (100) according to Claim 3, **characterized in that** the inner lateral end (E1) adjoins the tip region (3.4), and/or the outer lateral end (E2) is the outermost lateral end of the front face (3.1).

5. Valve (100) according to one of the preceding claims, **characterized in that** the outer part section of the edge region (10) has a smaller slope in comparison with the inner part section of the edge region (10), and/or the outer part section of the edge region (10) has a slope in a range of less than ±5°.

6. Valve (100) according to one of the preceding claims, **characterized in that** the outer part section of the edge region (10) is of substantially bulge-free configuration at least in sections, and/or the bulge (A) does not extend as far as a laterally outer end (E2) of the valve head (3).

7. Valve (100) according to one of the preceding claims, **characterized in that** the bulge (A) of the valve head (3) is formed by way of a spherical, parabolic or frustoconical shaped-out formation, the outer part section of the edge region (10) preferably deviating from the spherical, parabolic or frustoconical shaped-out formation.

8. Valve (100) according to one of the preceding claims, **characterized in that** the outer part section of the edge region (10) comprises the laterally outermost part of the front face (3.1).

9. Valve (100) according to one of the preceding claims, **characterized in that** the inner part section of the edge region (10) forms a lateral part of the bulge (A), and/or the outer part section of the edge region (10) extends laterally next to and outside the bulge (A).

10. Valve (100) according to one of the preceding claims, **characterized in that** the outer part section of the edge region (10) extends annularly, preferably extends in a rotationally symmetrical manner.

11. Valve (100) according to one of the preceding claims, **characterized in that** the neutral axis (4) of the valve head (3) is bulged towards the load side (P).

12. Valve (100) according to one of the preceding claims, **characterized in that** the front face (3.1) of the valve head (3) is of S-shaped configuration in cross section at least in portions.

13. Valve/valve seat combination with a valve (100) according to one of the preceding claims and a valve seat (5) for the valve (100).

14. Valve/valve seat combination according to Claim 13, **characterized in that** the effective centre (M) of the valve seat face (3.3) of the valve head (3) is defined by way of the centre of the contact area between the valve seat face (3.3) of the valve head (3) and the valve seat (5).

15. Motor vehicle, preferably commercial vehicle, with a valve/valve seat combination according to Claim 13 or 14.

## Revendications

1. Soupape (100), de préférence soupape de gaz d'échappement et/ou d'échange de gaz (100), comprenant : un plateau de soupape (3) présentant une surface avant (3.1) et une surface arrière (3.2), la surface avant (3.1) du plateau de soupape (3) comprenant un renflement (A), pourvue d'une région de sommet (3.4), et une région de bord (10), la soupape (100) étant réalisée sous la forme d'une soupape pleine et un biseau neutre (4) du plateau de soupape (3) s'étendant en partie du côté charge d'un plan de référence imaginaire (BE), le plan de référence (BE) passant par le centre actif (M) d'une surface de siège de soupape (3.3) du plateau de soupape (3) et s'étendant transversalement à une tige de soupape (2) de la soupape (100), la région de sommet (4.1) du biseau neutre (4) s'étendant de manière excentrée par rapport à la tige de soupape (2), et le biseau neutre (4) du plateau de soupape (3) s'étendant pour la majeure partie du côté charge du plan de référence (BE), **caractérisée en ce que**, de préférence pour réduire la masse du renflement (A) du plateau de soupape (3), une portion latéralement extérieure de la région de bord (10) est réalisée de manière plus plate qu'une portion latéralement intérieure de la région de bord (10), le renflement (A) du plateau de soupape (3) étant disposé au milieu.

2. Soupape (100) selon la revendication 1, **caractérisée en ce que** la région de bord (10) comprend, en section transversale, au moins une discontinuité (P1-P4) et l'au moins une discontinuité (P1-P4) comprend au moins un point de sommet, un point d'inflexion et/ou un point de courbure et de préférence l'au moins une discontinuité (P1-P4) s'étend sous forme annulaire, de préférence avec une symétrie de révolution.

3. Soupape (100) selon la revendication 2, **caractérisée en ce que** l'au moins une discontinuité (P1-P4) est disposée en section transversale du côté extérieur par rapport à une extrémité latéralement intérieure (E1) de la région de bord (10) et/ou est disposée du côté intérieur par rapport à une extrémité latéralement extérieure (E2) de la région de bord (10).

4. Soupape (100) selon la revendication 3, **caractérisée en ce que** l'extrémité latérale intérieure (E1) se raccorde à la région de sommet (3.4) et/ou l'extrémité latérale extérieure (E2) constitue l'extrémité latérale la plus extérieure de la surface avant (3.1).

5. Soupape (100) selon l'une des revendications précédentes, **caractérisée en ce que** la portion extérieure de la région de bord (10) présente une plus faible pente par comparaison avec la portion intérieure de la région de bord (10) et/ou la portion extérieure de la région de bord (10) présente une pente dans une plage inférieure à +- 5°.

6. Soupape (100) selon l'une des revendications précédentes, **caractérisée en ce que** la portion extérieure de la région de bord (10) est réalisée au moins en partie sensiblement sans renflement et/ou le renflement (A) ne s'étend pas jusqu'à une extrémité latéralement extérieure (E2) du plateau de soupape (3).

7. Soupape (100) selon l'une des revendications précédentes, **caractérisée en ce que** le renflement (A) du plateau de soupape (3) est formé par une formation sphérique, parabolique ou tronconique, la portion extérieure de la région de bord (10) s'écartant de préférence de la formation sphérique, parabolique ou tronconique.

8. Soupape (100) selon l'une des revendications précédentes, **caractérisée en ce que** la portion extérieure de la région de bord (10) comprend la partie latéralement la plus extérieure de la surface avant (3.1) .

9. Soupape (100) selon l'une des revendications précédentes, **caractérisée en ce que** la portion intérieure de la région de bord (10) forme une partie latérale du renflement (A) et/ou la portion extérieure de la région de bord (10) s'étend latéralement à côté et à l'extérieur du renflement (A).

10. Soupape (100) selon l'une des revendications précédentes, **caractérisée en ce que** la portion extérieure de la région de bord (10) s'étend annulairement, de préférence s'étend avec une symétrie de révolution.

11. Soupape (100) selon l'une des revendications précédentes, **caractérisée en ce que** le biseau neutre (4) du plateau de soupape (3) est bombé vers le côté charge (P).

12. Soupape (100) selon l'une des revendications précédentes, **caractérisée en ce que** la surface avant (3.1) du plateau de soupape (3) est réalisée en section transversale au moins partiellement en forme de S.

13. Combinaison de soupape et de siège de soupape comprenant une soupape (100) selon l'une des revendications précédentes et un siège de soupape (5) destiné à la soupape (100).

14. Combinaison de soupape et de siège de soupape selon la revendication 13, **caractérisée en ce que** le centre actif (M) de la surface de siège de soupape (3.3) du plateau de soupape (3) est défini par le centre de la surface de contact entre la surface de siège de soupape (3.3) du plateau de soupape (3) et le siège de soupape (5).

15. Véhicule automobile, de préférence véhicule utilitaire, comprenant une combinaison de soupape et de siège de soupape selon la revendication 13 ou 14.
